# EUROPEAN PATENT APPLICATION

(11) **EP 4 646 991 A1**
(43) Date of publication of application: **12.11.2025**
(21) Application number: 24738463.9
(22) Date of filing: 02.01.2024
(51) Int. Cl.: A47L 11/40

(54) **SELF-CLEANING MAINTENANCE STATION AND SELF-CLEANING MAINTENANCE SYSTEM**

(30) Priority: 04.01.2023 CN 202310010388
(71) Applicant: Beijing Roborock Technology Co., Ltd., Beijing 102206 (CN)
(72) Inventor: CHENG, Pan, Beijing 102206 (CN); LIN, Xiang, Beijing 102206 (CN)
(74) Representative: Haseltine Lake Kempner LLP
(86) International application number: PCT/CN2024/070218
(87) International publication number: WO 2024/146530

(57) **Abstract**

A self-cleaning maintenance station and a self-cleaning maintenance system. The self-cleaning maintenance station comprises a maintenance station bottom plate (1000), a maintenance station body (2000), a clean water tank (4000) and a cleaning liquid tank (3000). The maintenance station body (2000) comprises a water storage cavity (2700), which has an upward opening and is provided on the top of the maintenance station body (2000), and the clean water tank (4000) is mounted in or removed from the maintenance station body (2000) in the vertical direction. The maintenance station body (2000) further comprises a cleaning liquid cavity (2400), which is provided in the maintenance station body (2000) with the opening direction substantially perpendicular to the opening direction of the water storage cavity (2700). The cleaning liquid tank (3000) is mounted in or removed from the maintenance station body (2000) in the direction substantially perpendicular to the mounting direction of the clean water tank (4000).

## Description

### CROSS-REFERENCE TO RELATED APPLICATION

The present application claims priority to Chinese Patent Application No. 202310010388.2 filed on January 4, 2023, the disclosure of which is incorporated herein as a part of the present application by reference in its entirety.

### TECHNICAL FIELD

The present disclosure relates to the technical field of cleaning robots, and in particular to a self-cleaning maintenance station and a self-cleaning maintenance system.

### BACKGROUND ART

In recent years, with the development of science and technology, a variety of cleaning products have emerged, which have reduced people's burden in cleaning and sweeping, met their needs, and provided great convenience to their lives. Automatic cleaning devices are favored by people for their highly intelligent characteristics.

A self-cleaning maintenance station can automatically replenish clean water to the automatic cleaning device, collect dust, and clean a mop. However, the structure for addition of a cleaning solution is either too complicated or inconvenient to operate, bringing inconvenience to the application of the self-cleaning maintenance station.

### SUMMARY OF THE INVENTION

An object of the present disclosure is to provide a self-cleaning maintenance station and a self-cleaning maintenance system, which can facilitate users to freely add a cleaning solution.

Embodiments of the present disclosure provide a self-cleaning maintenance station, including a maintenance station base plate, a maintenance station body, a clean water tank, and a cleaning solution tank, wherein
the maintenance station body includes: a water storage chamber, which is opened upward and arranged at a top portion of the maintenance station body, and the clean water tank is assembled to or removed from the maintenance station body along a vertical direction; and
the maintenance station body further includes: a cleaning solution chamber, which is arranged on the maintenance station body along an opening direction substantially perpendicular to an opening direction of the water storage chamber, and the cleaning solution tank is assembled to or removed from the maintenance station body along a direction substantially perpendicular to an assembling direction of the clean water tank.

### BRIEF DESCRIPTION OF THE DRAWINGS

The accompanying drawings here are incorporated in and constitute part of the specification. They illustrate the embodiments consistent with the present disclosure and serve to, together with the specification, explain the principles of the present disclosure. Obviously, the accompanying drawings in the following description are only some embodiments of the present disclosure, and for those of ordinary skills in the art, other drawings may also be derived from these accompanying drawings without creative efforts. In these accompanying drawings:
FIG. 1 is a schematic diagram of an overall structure of a self-cleaning maintenance station according to some embodiments of the present disclosure;
FIG. 2 is a schematic diagram of an assembled structure of a cleaning solution tank in a self-cleaning maintenance station according to some embodiments of the present disclosure;
FIG. 3 is a schematic front diagram of a structure of a cleaning solution tank according to some embodiments of the present disclosure;
FIG. 4 is a schematic exploded front view of a structure of a cleaning solution tank according to some embodiments of the present disclosure;
FIG. 5 is a schematic diagram of an internal structure of a cleaning solution tank according to some embodiments of the present disclosure;
FIG. 6 is a schematic back diagram of a structure of a cleaning solution tank according to some embodiments of the present disclosure;
FIG. 7 is a schematic back diagram of a structure of a cleaning solution tank of other embodiments of the present disclosure; and
FIG. 8 is a schematic back diagram of a structure of a self-cleaning maintenance station according to some embodiments of the present disclosure.

Description of reference numerals:
self-cleaning maintenance station base plate 1000, self-cleaning maintenance station body 2000, cleaning chamber 2100, cleaning tank 2200, inclined surface 2300, cleaning solution chamber 2400, water storage chamber 2700, cleaning solution tank 3000, clean water tank 4000, slideway (or slide rail) 3400 of cleaning solution tank, cleaning solution tank housing 3100, cleaning solution tank end cover 3200, edge portion 3210, liquid replenishing port 3110, liquid replenishing cover 3111, hand-gripping position 3112, liquid replenishing plug 3113, liquid replenishing hole 3114, pivot shaft 3115, pivot hole 3116, hand-gripping portion 3220, hand-gripping portion protrusion 3221, cleaning solution pipe 3130, cleaning solution outlet 3140, float valve 3150, top surface 3190, bottom surface 3160, recessed portion 3170, recessed portion protrusion 3171, limiting column 3180, limiting claw 2420, fixing device 2430, cleaning solution pump 3300, clean water pump 4100, tee joint 4200, solenoid valve 4300.

### DETAILED DESCRIPTION

To make the objects, technical solutions, and advantages of the present disclosure clearer, the present disclosure will be further described in detail below with reference to the accompanying drawings. Obviously, the described embodiments are only part but not all of the embodiments of the present disclosure. All other embodiments obtained by those of ordinary skill in the art based on the embodiments in the present disclosure, without creative efforts, fall within the protection scope of the present disclosure.

The terms used in the embodiments of the present disclosure are for the purpose of describing particular embodiments only, and are not intended to limit the present disclosure. The singular forms "a/an", "said" and "the" as used in the embodiments of the present disclosure and the appended claims are intended to include the plural forms as well, unless otherwise clearly indicated in the context, and the term "a plurality of" generally means at least two.

It should be understood that the term "and/or" as used herein describes only an association relationship between associated objects, indicating three types of possible relationships. For example, A and/or B may indicate the following three cases: A exists alone; both A and B exist; or B exists alone. In addition, the character "/" herein generally indicates an "or" relationship between preceding and following associated objects.

It should be understood that, although the terms first, second, third or the like may be used for description in the embodiments of the present disclosure, these should not be limited to these terms. These terms are only used for a distinguishing purpose. For example, without departing from the scope of the embodiments of the present disclosure, "first" may also be referred to as "second", and similarly, "second" may also be referred to as "first".

It should also be noted that the terms "include," "contain," or any other variants thereof are intended to cover the nonexclusive inclusion, such that a commodity or device including a series of elements not only includes those elements, but also includes other unclearly listed elements, or also includes the inherent elements of such a commodity or device. Without more limitations, an element defined by the phrase "including an" does not exclude the existence of other same elements in the commodity or device that includes such an element.

The alternative embodiments of the present disclosure will be described in detail below in conjunction with the accompanying drawings.

In the related art, a cleaning solution tank and a clean water tank are integrated, and a cleaning solution and clean water are mixed by pumping the cleaning solution from the cleaning solution tank into the clean water tank. In such a structure, it is inconvenient to add the cleaning solution, and the cleaning solution tank and the clean water tank need to be removed together, leading to unnecessary drawing of the other of the two tanks each time one tank is drawn, and bringing inconvenience when adding the cleaning solution or clean water.

To this end, an embodiment of the present disclosure provides a self-cleaning maintenance station, which includes a maintenance station body, a clean water tank and a cleaning solution tank. The maintenance station body includes: a water storage chamber, which is opened upward and arranged at the top portion of the maintenance station body, and the clean water tank is assembled to or removed from the maintenance station body along a vertical direction. The maintenance station body further includes: a cleaning solution chamber, which is arranged on the maintenance station body along an opening direction substantially perpendicular to the opening direction of the water storage chamber, and the cleaning solution tank is assembled to or removed from the maintenance station body along a direction substantially perpendicular to an assembling direction of the clean water tank.

The self-cleaning maintenance station of the present disclosure is provided with the cleaning solution tank that can be independently drawn in the horizontal direction. In this way, the drawing direction of the cleaning solution tank is perpendicular to the drawing direction of the clean water tank, and the two tanks do not interfere with each other, such that the cleaning solution can be added more conveniently. In addition, the cleaning solution tank is arranged below the clean water tank, such that a flow path of the cleaning solution is shortened while limited space resource of the self-cleaning maintenance station is fully utilized, which facilitates the addition of the cleaning solution.

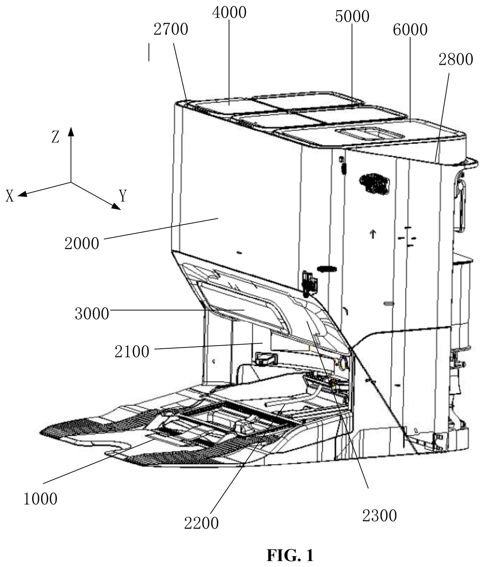

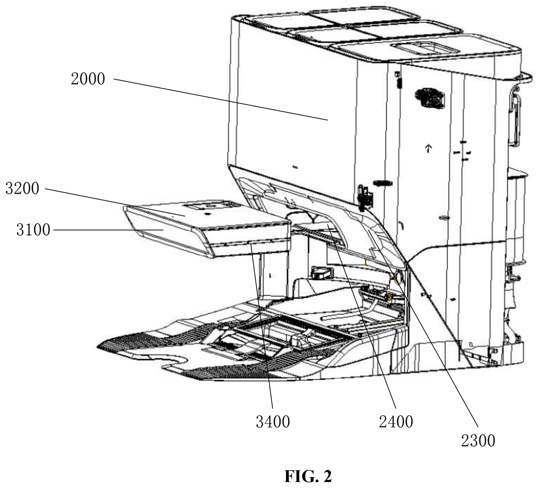

Specifically, an embodiment of the present disclosure provides a self-cleaning maintenance station. As an example, FIG. 1 is a schematic diagram of the overall structure of the self-cleaning maintenance station according to some embodiments of the present disclosure; and FIG. 2 is a schematic diagram of the assembled structure of the cleaning solution tank in the self-cleaning maintenance station according to some embodiments of the present disclosure.

In order to more clearly describe the behavior of the self-cleaning maintenance station, the directions are defined as follows. The self-cleaning maintenance station can be calibrated by the following three mutually perpendicular axes as defined: a transverse axis Y, a front-back axis X, and a central vertical axis Z. The direction opposite to the arrow of the front-back axis X is marked as "rearward", in which case the automatic cleaning device enters the self-cleaning maintenance station, and the direction following the arrow of the front-back axis X is marked as "forward", in which case the automatic cleaning device leaves the self-cleaning maintenance station. The transverse axis Y essentially indicates the direction of the width of the self-cleaning maintenance station body, the direction following the arrow of the transverse axis Y indicates the "left side" of the self-cleaning maintenance station, and the direction opposite to the arrow of the transverse axis Y indicates the "right side" of the self-cleaning maintenance station. The vertical axis Z indicates the direction extending upward from the bottom surface of the self-cleaning maintenance station, the direction following the arrow of the vertical axis Z indicates the "upper side" of the self-cleaning maintenance station, and the direction opposite to the arrow of the vertical axis Z indicates the "lower side" of the self-cleaning maintenance station.

As shown in FIG. 1, the self-cleaning maintenance station provided in this embodiment includes the self-cleaning maintenance station base plate 1000 and the self-cleaning maintenance station body 2000. The self-cleaning maintenance station base plate 1000 and the self-cleaning maintenance station body 2000 are detachably or non-detachably connected. The detachable connection facilitates the transportation and maintenance of the self-cleaning maintenance station base plate 1000 and the self-cleaning maintenance station body 2000.

As shown in FIG. 2, the self-cleaning maintenance station body 2000 includes a water storage chamber 2700 and a dust collection chamber 2800. The water storage chamber 2700 is opened upwardly and is arranged at the top portion of the self-cleaning maintenance station body 2000. The water storage chamber includes a clean water chamber for accommodating a clean water tank and a sewage chamber for accommodating a sewage tank 5000. The dust collection chamber 2800 is opened upward and is arranged side by side with the water storage chamber 2700 at the top end of the self-cleaning maintenance station body 2000. The upward design of the water storage chamber 2700 and the dust collection chamber 2800 facilitates the installation and removal of the clean water tank, the sewage tank 5000 and a dust collecting cover 6000. In this way, the clean water tank, the sewage tank 5000 and the dust collecting cover 6000 are all assembled or removed in a substantially vertical direction from the top portion of the self-cleaning maintenance station body 2000, and this structural design conforms to the user's usage habits. In addition, the upward opening design facilitates daily maintenance of components in the clean water tank, the sewage tank 5000 and the dust collecting cover 6000.

As shown in FIG. 2, the water storage chamber 2700 and the dust collection chamber 2800 are defined by the rear wall, front wall and a plurality of side walls of the self-cleaning maintenance station body 2000. The rear wall, front wall and one side wall of the water storage chamber 2700 are coplanar with those of the dust collection chamber 2800, respectively. The height of the rear wall of the self-cleaning maintenance station body 2000 is slightly lower than that of the front wall of the self-cleaning maintenance station body 2000. The height of the front wall of the self-cleaning maintenance station body 2000 is equivalent to the height of each of the clean water tank, the sewage tank 5000 and the dust collection hood 6000. The side walls of the self-cleaning maintenance station body 2000 connect the rear wall and the front wall, and the end surface of each side wall of the self-cleaning maintenance station body 2000 has an inclined structure. The upward design of the water storage chamber 2700 and the dust collection chamber 2800 facilitates the installation and removal of the clean water tank 4000, the sewage tank 5000 and the dust collection hood 6000, and the inclined structure of the end surface of each side wall ensures the stability and aesthetics of the clean water tank, the sewage tank 5000 and the dust collection hood 6000 that are installed in the water storage chamber 2700 and the dust collection chamber 2800. The water storage chamber 2700 is used to accommodate the clean water tank and the sewage tank 5000. The water storage chamber 2700 includes a vertically extending partition plate therein, which divides the water storage chamber 2700 into two parts, with one part serving as the clean water chamber for accommodating the clean water tank 4000, and the other part serving as the sewage chamber for accommodating the sewage tank 5000.

The outer side wall of the self-cleaning maintenance station body 2000 wraps the water storage chamber 2700 and the dust collection chamber 2800 to form a U-shaped wrapping structure, for example, which at least wraps the front side walls and parts of the left and right side walls of the water storage chamber 2700 and the dust collection chamber 2800, such that when the clean water tank 4000, the sewage tank 5000 and the dust collection hood 6000 are assembled to the top end of the self-cleaning maintenance station body 2000, the clean water tank 4000, the sewage tank 5000 and the dust collection hood 6000 are not exposed to the outside at the front side and the rear side of the self-cleaning maintenance station body 2000, thereby increasing the overall aesthetics and neatness of the self-cleaning maintenance station.

A cleaning chamber 2100 that opens forward is formed between the lower portion of the self-cleaning maintenance station body 2000 and the self-cleaning maintenance station base plate 1000, and is used to accommodate the automatic cleaning device when the automatic cleaning device returns to the self-cleaning maintenance station for maintenance operations. The cleaning tank 2200 is provided at the bottom of the self-cleaning maintenance station body, and is configured such that when the automatic cleaning device is adapted to the cleaning chamber 2100, cleaning components, such as the mop, on the automatic cleaning device are cleaned through the cleaning tank 2200.

As shown in FIG. 2, the maintenance station body 2000 further includes a cleaning solution chamber 2400, which is arranged on the maintenance station body 2000 along an opening direction substantially perpendicular to the water storage chamber 2700, that is, the cleaning solution chamber 2400 is arranged in a front-back manner along a substantially horizontal direction. The cleaning solution tank 3000 is assembled to or removed from the maintenance station body 2000 along a direction substantially perpendicular to the assembling direction of the clean water tank 4000. That is, the cleaning solution tank 3000 is removed from the maintenance station body 2000 in a drawer-like manner substantially along the front-back direction. The opening of the cleaning solution chamber 2400 is located at the inclined surface 2300 of the upper edge of the cleaning chamber 2100.

The cleaning solution chamber 2400 is located at the lower side of the water storage chamber 2700. The clean water tank 4000 is drawn substantially along a vertical direction in the water storage chamber 2700, while the cleaning solution tank 3000 is drawn substantially along the front-back direction in the cleaning solution chamber 2400, such that the clean water tank and the cleaning solution tank do not interfere with each other and are drawn independently. The location of the cleaning solution tank 3000 at the lower side of the clean water tank 4000 can save more space, making it more convenient for users to replenish the cleaning solution.

In some embodiments, slide rails (or slideways) (not shown in the drawings) are provided on both sides of the cleaning solution chamber 2400, and slideways (or slide rails) 3400 are provided on the outer walls on both sides of the cleaning solution tank 3000. The slideways (or slide rails) 3400 of the cleaning solution tank 3000 run along the slide rails (or slideways) of the cleaning solution chamber 2400 for slidably drawing the cleaning solution chamber 2400.

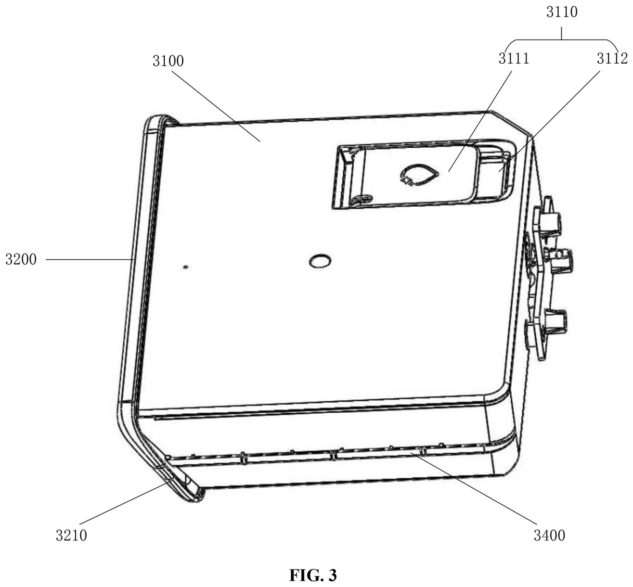

As shown in FIG. 3, the cleaning solution tank 3000 includes a cleaning solution tank housing 3100 and a cleaning solution tank end cover 3200, which are formed by integrated injection molding or bonding molding. The cleaning solution tank end cover 3200 fits the front side of the cleaning solution tank housing 3100, and is configured such that when the cleaning solution tank 3000 is assembled to the maintenance station body 2000, the cleaning solution tank end cover 3200 is flush with the outer surface of the maintenance station body 2000.

In some embodiments, the side of the cleaning solution tank housing 3100 fitting the cleaning solution tank end cover 3200 is inclined, and the cleaning solution tank end cover 3200 fits the inclined front side surface of the cleaning solution tank housing 3100. The projection plane of the cleaning solution tank housing 3100 on the cleaning solution tank end cover 3200 is located within the inner surface of the cleaning solution tank end cover 3200. That is, the area of the cleaning solution tank end cover 3200 is slightly larger than that of the front side surface of the cleaning solution tank housing 3100. As shown in FIG. 1, an inclined surface 2300 is provided at the position on the upper edge of the cleaning chamber 2100 engaged with the outer peripheral surface of the water storage chamber 2700, such that the maintenance station body 2000 has an inclined surface structure formed at the edge of the cleaning chamber 2100, and the inclined surface structure facilitates the automatic cleaning device to enter and exit the cleaning chamber 2100. The inclination angle at which the cleaning solution tank end cover 3200 fits the inclined front side surface of the cleaning solution tank housing 3100 is the same as the inclination angle of the inclined surface 2300, such that after the cleaning solution tank 3000 is inserted into the cleaning solution chamber 2400, the cleaning solution tank end cover 3200 is flush with the inclined surface 2300 to ensure that the automatic cleaning device freely enters and exits the cleaning chamber 2100, and that the inclined surface 2300 remains smooth and neat.

The cleaning solution tank end cover 3200 has an edge portion 3210 enclosing the cleaning solution tank end cover 3200. The edge portion 3210 extends toward the maintenance station body 2000 in a direction substantially perpendicular to the surface of the cleaning solution tank end cover 3200, such that after the cleaning solution tank 3000 is inserted into the cleaning solution chamber 2400, the cleaning solution tank end cover 3200 is completely buckled with the edge of the cleaning solution chamber 2400, thereby ensuring that the cleaning solution tank end cover 3200 is flush with the inclined surface 2300.

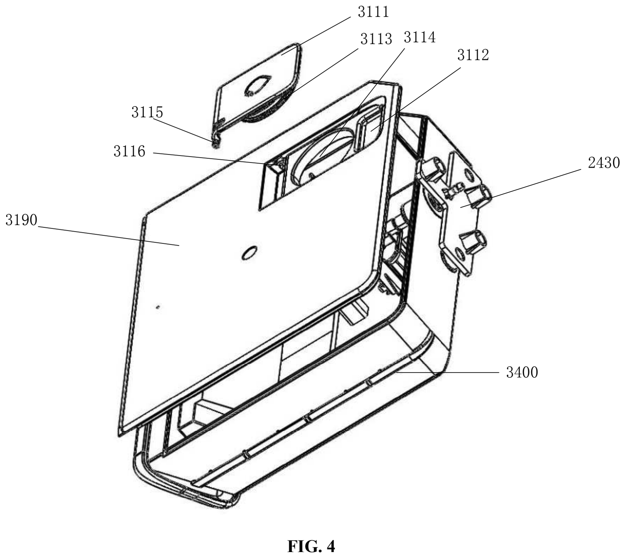

In some embodiments, as shown in FIGS. 3 and 4, the cleaning solution tank housing 3100 has a substantially cuboidal structure, or other shaped structures such as a cylindrical structure, which is not limited herein. The following description takes the cuboidal structure as an example. The cleaning solution tank housing 3100 includes an inclined front side surface (not shown in the drawings), a top surface 3190, a bottom surface 3160, left and right side surfaces and a rear side surface (not shown in the drawings). The slideways (or slide rails) 3400 are provided on the left and right side surfaces. In some embodiments, the top surface 3190 of the cleaning solution tank housing is transparent, so that the user may observe the liquid level of the cleaning solution through the transparent top surface 3190. A plurality of reinforcing ribs are provided inside at least the left and right side surfaces of the cleaning solution tank housing 3100 to strengthen the cleaning solution tank housing 3100 and prevent the cleaning solution tank housing 3100 from deformation after multiple drawing operations to affect the smoothness of subsequent drawing operations.

In some embodiments, as shown in FIGS. 3 to 4, the cleaning solution tank housing 3100 includes a liquid replenishing port 3110, which is disposed in the top surface 3190 of the cleaning solution tank housing and on a side of the cleaning solution tank housing 3100 away from the cleaning solution tank end cover 3200. The liquid replenishing port 3110 is configured for adding the cleaning solution therethrough when the cleaning solution tank 3000 is drawn out from the maintenance station body 2000. Optionally, the liquid replenishing port 3110 is disposed close to the inner edge of the cleaning solution tank housing 3100, for example, in the innermost corner of the cleaning solution tank housing 3100, such that the cleaning solution is added only after the liquid replenishing port is completely exposed by completely drawing out the cleaning solution tank 3000 from the maintenance station body 2000, which eliminates the inconvenience and the risk of spilling the cleaning solution when the cleaning solution is added while the cleaning solution tank 3000 is not drawn out.

In this embodiment, the liquid replenishing port 3110 includes a liquid replenishing hole 3114 and a liquid replenishing cover 3111. A liquid replenishing plug 3113 is provided on the lower surface of the liquid replenishing cover 3111. The liquid replenishing plug 3113 is inserted into the liquid replenishing hole 3114 to achieve sealed closure of the liquid replenishing port 3110. Optionally, the liquid replenishing cover 3111 is formed of hard plastic, and the liquid replenishing plug 3113 is formed of elastic plastic or a rubber material. In some embodiments, the liquid replenishing port 3110 further includes a pivot hole 3116 provided at the edge of the liquid replenishing hole 3114. A pivot shaft 3115 is provided at the corresponding end of the liquid replenishing cover 3111. After being inserted into the pivot hole 3116, the pivot shaft 3115 is allowed to rotate freely to cooperate with the opening and closing of the liquid replenishing cover 3111. In some embodiments, a hand-gripping position 3112 is further provided on the side of the liquid replenishing hole 3114 away from the pivot hole 3116. The hand-gripping position 3112 has a recessed structure, which is convenient for the user to stretch his/her finger to the hand-gripping position 3112 to open the liquid replenishing cover 3111. Optionally, the hand-gripping position 3112 is provided close to the rear side surface, and the liquid replenishing cover 3111 is opened from the back to the front relative to the cleaning solution tank 3000. This design also forces the user to open the liquid replenishing port 3110 to add the cleaning solution only after completely drawing out the cleaning solution tank 3000.

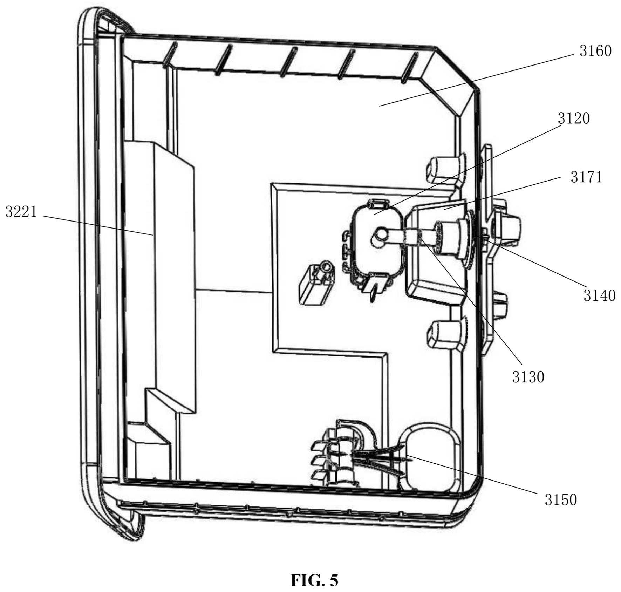

In some embodiments, as shown in FIG. 5, the cleaning solution tank 3000 includes a cleaning solution filter mesh 3120 therein, which is arranged on the bottom surface inside the cleaning solution tank housing 3100. When the cleaning solution is pumped, the cleaning solution is first filtered through the cleaning solution filter mesh 3120, and then pumped out of the cleaning solution tank 3000 through a cleaning solution pipe 3130 via a cleaning solution outlet 3140. The cleaning solution filter mesh 3120 filters the cleaning solution to prevent impurities from damaging a cleaning solution pump 3300 or components in subsequent flow channels.

In some embodiments, the cleaning solution tank further includes a float valve 3150, which is disposed in the cleaning solution tank 3000 for detecting the liquid level of the cleaning solution and detecting whether the cleaning solution tank is assembled to the maintenance station body. In some embodiments, the float valve 3150 is implemented as a small float ball, which is small in footprint and low in cost and may increase the amount of the cleaning solution that may be contained in the cleaning solution tank. Moreover, due to its small size, the small float ball has little effect on the volume for the cleaning solution contained in the cleaning solution tank, and can increase the rotation sensitivity of the float, thereby increasing the detection sensitivity. In some embodiments, the float valve 3150 includes a cleaning solution float ball base and a cleaning solution float ball. The cleaning solution float ball base is disposed at the bottom of the cleaning solution tank 3000. The cleaning solution float ball is rotatably connected to the cleaning solution float ball base, and is configured to perform liquid level detection on the cleaning solution. The cleaning solution float ball drops as the liquid level of the cleaning solution drops under the action of gravity, and when the cleaning solution float ball drops to a preset threshold, a controller recognizes that the cleaning solution in the cleaning solution tank 3000 is exhausted and issues a warning indicating addition of the cleaning solution. In some embodiments, the maintenance station body 2000 includes a cleaning solution status indicator light, which is controlled to light up when the liquid level of the cleaning solution is lower than the preset threshold.

In some embodiments, the maintenance station body includes a Hall element (not shown in the drawings), which is disposed on the maintenance station body. Optionally, the Hall element is disposed on the rear side wall of the cleaning solution chamber 2400. A magnetic element is disposed in the float valve 3150 for detecting, based on its induction with the Hall element, the liquid level of the cleaning solution and detecting whether the cleaning solution tank is assembled to the maintenance station body. For example, when the magnetic element is far away from the Hall element and there is no induction signal, the system alarms to indicate that the cleaning solution tank is not assembled to a suitable position on the maintenance station body and needs to be reassembled, or that the liquid level of the cleaning solution is lower than the threshold and the cleaning solution needs to be added.

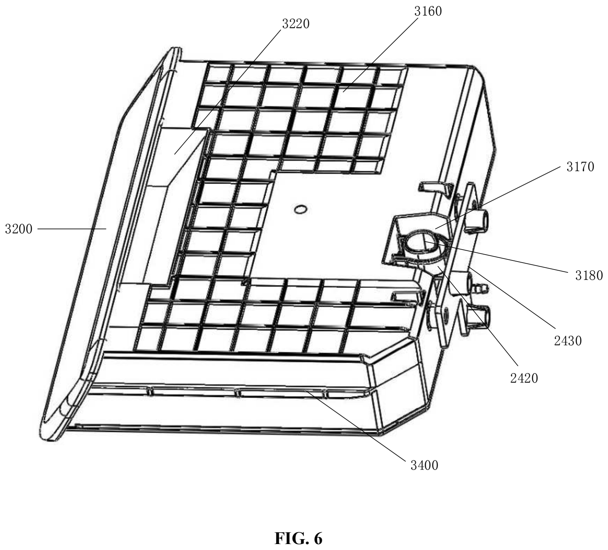

In some embodiments, as shown in FIG. 6, the cleaning solution tank housing 3100 includes a recessed portion 3170 located on the side of the cleaning solution tank housing 3100 away from the cleaning solution tank end cover 3200. Optionally, the recessed portion 3170 is located at the junction between the bottom surface 3160 and the rear side surface of the cleaning solution tank housing 3100. The recessed portion 3170 forms a backward notch at the bottom surface of the cleaning solution tank housing 3100, and a recessed portion protrusion 3171 at the corresponding position inside the cleaning solution tank housing 3100. As shown in FIG. 5, a limiting column 3180 extends from the interior of the recessed portion 3170 substantially in a direction perpendicular to the bottom surface 3160. The limiting column 3180 is located in the recessed portion. The limiting column 3180 may have a cylindrical or prismatic structure, which is not limited herein. In order to reduce material consumption, the limiting column 3180 may have a hollow structure. The bottom surface 3160 of the cleaning solution tank housing 3100 includes a plurality of reinforcing ribs for strengthening the bottom surface 3160.

The maintenance station body 2000 includes a limiting claw 2420. Optionally, the limiting claw 2420 is arranged on the rear side wall of the cleaning solution chamber 2400 by means of a fixing device 2430. Optionally, the limiting claw is an elastic member, and is configured such that, when the cleaning solution tank 3000 is assembled to the cleaning solution chamber 2400, the limiting column 3180 stretches into the elastic limiting claw 2420, which then opens and embraces the limiting column 3180, allowing the limiting claw 2420 to clamp the limiting column 3180 and preventing the cleaning solution tank 3000 from continuing to slide inward, such that the cleaning solution tank end cover 3200 is flush with the inclined surface at the front side of the maintenance station body 2000. When the cleaning solution tank 3000 is drawn out of the cleaning solution chamber 2400, the limiting claw 2420 opens and releases the limiting column 3180 under the action of elastic force, such that the cleaning solution tank 3000 can be completely drawn out from the cleaning solution chamber 2400. Optionally, the limiting claw 3180 are two arc-shaped elastic pieces in a natural state, and the ends of the two arc-shaped elastic pieces are arc-shaped ends which are open outward to facilitate the limiting column 3180 to enter the two arc-shaped elastic pieces. When the limiting claw 3180 clamps the limiting column 3180, the two arc-shaped elastic pieces hold the limiting column 3180 tightly.

The back surface of the cleaning solution tank housing 3100 further includes a hand-gripping portion 3220 located on one side of the cleaning solution tank housing 3100 close to the cleaning solution tank end cover 3200. The hand-gripping portion 3220 forms a depression inwardly along the bottom surface of the cleaning solution tank housing 3100, thereby allowing the hand-gripping portion 3220 to be formed between the depression position and the cleaning solution tank end cover 3200. The depression formed by the portion 3220 forms a finger-pulling portion protrusion 3221 at the corresponding position inside the cleaning solution tank housing 3100. As shown in FIG. 5, the bottom surface shape of the hand-gripping portion 3220 includes a rectangle, a circle, etc., which is not limited herein.

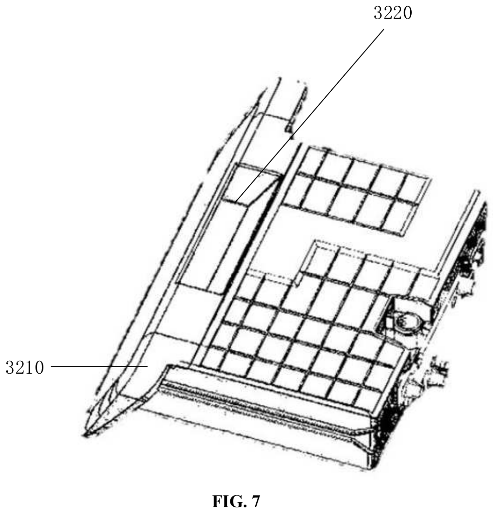

In some other embodiments, as shown in FIG. 7, the side of the cleaning solution tank housing 3100 fitting the cleaning solution tank end cover 3200 is inclined, and the cleaning solution tank end cover 3200 fits the inclined front side surface of the cleaning solution tank housing 3100. The projection plane of the cleaning solution tank housing 3100 on the cleaning solution tank end cover 3200 is located within the inner surface of the cleaning solution tank end cover 3200. That is, the area of the cleaning solution tank end cover 3200 is much larger than that of the front side surface of the cleaning solution tank housing 3100. The cleaning solution tank end cover 3200 has the edge portion 3210 enclosing the cleaning solution tank end cover 3200. The edge portion 3210 extends toward the maintenance station body 2000 in a direction substantially perpendicular to the surface of the cleaning solution tank end cover 3200. Here, the distance the edge portion 3210 extends at the top of the cleaning solution tank end cover 3200 is less than the distance it extends at the bottom of the cleaning solution tank end cover 3200; and the separation distance between the distance the edge portion 3210 extends at the top of the cleaning solution tank end cover 3200 and the distance it extends at the bottom of the cleaning solution tank end cover 3200 continuously increases, such that the distance the edge portion 3210 extends at the bottom of the cleaning solution tank end cover 3200 has a certain width. The recessed hand-gripping portion 3220 is formed inwardly on the edge portion 3210 at the bottom of the cleaning solution tank end cover 3200, and the user can conveniently draw out the cleaning solution tank 3000 through the recessed hand-gripping portion 3220. When the cleaning solution tank 3000 is assembled to the cleaning solution chamber 2400, the hand-gripping portion 3220 is located substantially below the cleaning solution chamber 2400. The bottom surface shape of the hand-gripping portion 3220 includes a rectangle, a circle, etc., which is not limited herein.

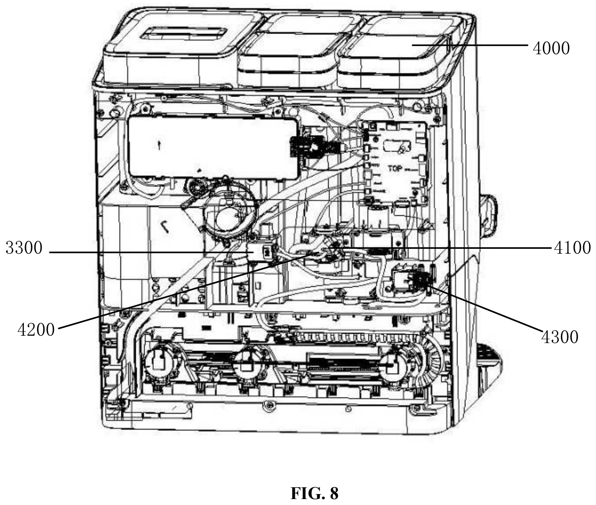

In some embodiments, as shown in FIG. 8, the self-cleaning maintenance station further includes the cleaning solution pump 3300, which is arranged on the side of the maintenance station body 2000 opposite to the opening direction of the cleaning solution chamber 2400. That is, the cleaning solution pump 3300 is arranged behind the back of the maintenance station body 2000. The cleaning solution pump 3300 communicates with a cleaning solution outlet 3140. The required amount of cleaning solution is pumped out from the cleaning solution tank 3000 by the cleaning solution pump 3300, and the cleaning solution flows from the cleaning solution outlet 3140 into the cleaning solution pump 3300. The cleaning solution pump 3300 may be a peristaltic pump.

In some embodiments, the self-cleaning maintenance station further includes a clean water pump 4100, which is arranged on the side of the maintenance station body 2000 opposite to the opening direction of the cleaning solution chamber 2400. That is, the clean water pump 4100 is arranged behind the back of the maintenance station body 2000. The clean water pump 4100 communicates with the water outlet of the clean water tank 4000, and the required amount of clean water is pumped out from the clean water tank 4000 by the clean water pump 4100.

In some embodiments, the self-cleaning maintenance station further includes a tee joint 4200, which includes two liquid inlets and one liquid outlet. The two liquid inlets are respectively connected to the liquid outlet of the cleaning solution pump 3300 and the liquid outlet of the clean water pump 4100, and the cleaning solution and the supplied clean water mix with each other in the tee joint. For the mixing of the cleaning solution and the clean water in the tee joint, the power of the cleaning solution pump 3300 and of the clean water pump 4100 may be adjusted in real time according to different cleaning requirements, and the amounts of the cleaning solution and of the clean water may be controlled in real time to meet different cleaning requirements. For example, the concentration of the cleaning solution required for cleaning the mop is high, so the power of the cleaning solution pump may be increased to obtain a high-concentration mixed liquid. When the water tank is allocated to the cleaning device, the power of the cleaning solution pump may be reduced to reduce the concentration of the cleaning solution, allowing for mopping with more clean water.

In some embodiments, the self-cleaning maintenance station further includes a solenoid valve 4300, which is arranged on the side of the maintenance station body 2000 opposite to the opening direction of the cleaning solution chamber 2400. That is, the solenoid valve 4300 is arranged behind the back of the maintenance station body 2000. The solenoid valve 4300 is used to control the opening or closing of the liquid outlet of the tee joint 4200 to allow the mixed liquid of the cleaning solution and the clean water to flow out. The solenoid valve 4300 is divided into two branches through a pipeline, with one branch communicating with the cleaning tank and the other communicating with the water inlet for adding water to the water tank of the automatic cleaning device. The solenoid valve 4300 is used to control the mixed liquid of the cleaning solution and the clean water to flow into the cleaning tank to clean the mop of the automatic cleaning device, or flow into the water tank of the automatic cleaning device for mopping, as needed.

The self-cleaning maintenance station of the present disclosure is provided with the cleaning solution tank which is drawn in a horizontal direction. By providing the cleaning solution tank with the horizontal drawing direction perpendicular to that of the clean water tank, the two tanks do not interfere with each other, such that the cleaning solution can be added more conveniently.

In the cleaning solution tank of the self-cleaning maintenance station of the present disclosure, by providing the tee joint, the cleaning solution and clean water are pumped into the tee joint for mixing, and the mixing ratio and the flow direction of the mixed liquid are controlled as needed, such that the mixed liquid is more accurate.

In the cleaning solution tank of the self-cleaning maintenance station of the present disclosure, by arranging the liquid replenishing port on the inner side of the cleaning solution tank and allowing the liquid replenishing cover to be opened in a back-to-front direction, the user has to completely draw the cleaning solution tank out of the cleaning solution chamber before adding the cleaning solution, thereby avoiding the risk of spilling the cleaning solution onto the self-cleaning maintenance station or the automatic cleaning device located on the self-cleaning maintenance station.

The cleaning solution tank end cover of the present disclosure fits the front side of the cleaning solution tank housing, and is configured such that when the cleaning solution tank is assembled to the maintenance station body, the cleaning solution tank end cover is flush with the outer surface of the maintenance station body, thereby ensuring the concise appearance of the self-cleaning maintenance station. The hidden hand-gripping portion is also convenient for drawing out the cleaning solution tank at any time. Moreover, when the automatic cleaning device is located on the self-cleaning maintenance station for maintenance, the operation button of the automatic cleaning device is usually located on the inner side of the self-cleaning maintenance station, and when the user wants to manually operate the above-mentioned operation button, the design allowing the cleaning solution tank end cover to be flush with the outer surface of the maintenance station body avoids blocking of the user's hand movement, achieving more convenience in user operation.

The embodiments of the present disclosure further provide a self-cleaning maintenance system, including the automatic cleaning device and the self-cleaning maintenance stations as described in any of the above items. The automatic cleaning device enters the self-cleaning maintenance station to fulfill functions such as dust collecting, mop cleaning, adding of clean water or sewage removing, and the self-cleaning maintenance station performs corresponding operations based on the current function requirement of the automatic cleaning device by means of a control system, which will not be described in detail.

The present application further provides the following embodiments.

In some embodiments, the cleaning solution chamber is located at the lower side of the water storage chamber.

In some embodiments, the self-cleaning maintenance station further includes: the cleaning solution pump, which is arranged on the side of the maintenance station body opposite to the opening direction of the cleaning solution chamber, and the cleaning solution pump is configured to pump out the cleaning solution from the cleaning solution tank.

In some embodiments, the self-cleaning maintenance station further includes: the clean water pump, which is arranged on the side of the maintenance station body opposite to the opening direction of the cleaning solution chamber, and the clean water pump is configured to pump out the clean water from the clean water tank.

In some embodiments, the self-cleaning maintenance station further includes: the tee joint, which is connected to the cleaning solution pump and the clean water pump respectively, and the cleaning solution and the clean water are mixed in the tee joint.

In some embodiments, the self-cleaning maintenance station further includes: the solenoid valve, which is configured to control opening and closing of the liquid outlet of the tee joint to allow the mixed liquid of the cleaning solution and the clean water to flow into the cleaning tank and/or the automatic cleaning device.

In some embodiments, the slide rails or slideways are provided on both sides of the cleaning solution chamber, the slideways or slide rails are provided on the outer walls on both sides of the cleaning solution tank, and the cleaning solution tank is drawn out from the cleaning solution chamber along the slide rails or slideways.

In some embodiments, the cleaning solution tank includes: the float valve arranged in the cleaning solution tank for detecting the liquid level of the cleaning solution and/or detecting whether the cleaning solution tank is assembled to the maintenance station body.

In some embodiments, the cleaning solution tank includes: the hand-gripping portion arranged at the lower side of the cleaning solution tank.

The embodiments of the present disclosure further provide a self-cleaning maintenance system, including the automatic cleaning device and the self-cleaning maintenance stations as described in any of the above items.

Compared with the prior art, the embodiments of the present disclosure have the following technical effects:
the self-cleaning maintenance station of the present disclosure is provided with the cleaning solution tank which is drawn in a horizontal direction. In this way, the drawing direction of the cleaning solution tank is perpendicular to that of the clean water tank, and the two tanks do not interfere with each other, such that the cleaning solution can be added more conveniently.

Finally, it should be noted that the embodiments in the specification are described in a progressive manner, with each embodiment focusing on its difference from other embodiments, and cross reference may be made for the same or similar sections between the embodiments.

The above embodiments are for the purpose of illustrating the technical solutions of the present disclosure only, and are not intended to limit the present disclosure. Although the present disclosure has been described in detail with reference to the foregoing embodiments, those of ordinary skill in the art should understand that: they can still make modifications to the technical solutions described in the foregoing embodiments, or make equivalent substitutions to some of the technical features. These modifications or substitutions do not deviate the essence of the corresponding technical solutions from the spirit and scope of the technical solutions of the embodiments of the present disclosure.

## Claims

1. A self-cleaning maintenance station, comprising a maintenance station base plate, a maintenance station body, a clean water tank, and a cleaning solution tank, wherein
the maintenance station body comprises: a water storage chamber, which is opened upward and arranged at a top portion of the maintenance station body; and the clean water tank is assembled to or removed from the maintenance station body along a vertical direction; and
the maintenance station body further comprises: a cleaning solution chamber, which is arranged on the maintenance station body along an opening direction substantially perpendicular to an opening direction of the water storage chamber; and the cleaning solution tank is assembled to or removed from the maintenance station body along a direction substantially perpendicular to an assembling direction of the clean water tank.

2. The self-cleaning maintenance station according to claim 1, wherein the cleaning solution chamber is located at a lower side of the water storage chamber.

3. The self-cleaning maintenance station according to claim 2, wherein the self-cleaning maintenance station further comprises:
a cleaning solution pump, which is arranged on a side of the maintenance station body opposite to the opening direction of the cleaning solution chamber, and the cleaning solution pump is configured to pump out a cleaning solution from the cleaning solution tank.

4. The self-cleaning maintenance station according to claim 3, wherein the self-cleaning maintenance station further comprises:
a clean water pump, which is arranged on a side of the maintenance station body opposite to the opening direction of the cleaning solution chamber, and the clean water pump is configured to pump out clean water from the clean water tank.

5. The self-cleaning maintenance station according to claim 4, further comprising:
a tee joint, which is connected to the cleaning solution pump and the clean water pump respectively, wherein the cleaning solution and the clean water are mixed in the tee joint.

6. The self-cleaning maintenance station according to claim 5, further comprising:
a solenoid valve, which is configured to control opening and closing of a liquid outlet of the tee joint to allow a mixed liquid of the cleaning solution and the clean water to flow into a cleaning tank and/or an automatic cleaning device.

7. The self-cleaning maintenance station according to any one of claims 1 to 6, wherein slide rails or slideways are provided on both sides of the cleaning solution chamber, slideways or slide rails are provided on outer walls on both sides of the cleaning solution tank, and the cleaning solution tank is drawn out from the cleaning solution chamber along the slide rails or slideways.

8. The self-cleaning maintenance station according to any one of claims 1 to 7, wherein the cleaning solution tank comprises:
a float valve, which is arranged in the cleaning solution tank and is configured to detect a liquid level of the cleaning solution and/or whether the cleaning solution tank is assembled to the maintenance station body.

9. The self-cleaning maintenance station according to any one of claims 1 to 8, wherein the cleaning solution tank comprises:
a hand-gripping portion, which is arranged at a lower side of the cleaning solution tank.

10. A self-cleaning maintenance system, comprising an automatic cleaning device and the self-cleaning maintenance station according to any one of claims 1 to 9.
